# EUROPEAN PATENT SPECIFICATION

(11) **EP 1 888 961 B1**
(45) Date of publication and mention of the grant of the patent: **25.11.2020**
(21) Application number: 06747795.0
(22) Date of filing: 22.05.2006
(51) Int. Cl.: F16L 37/40, F16L 37/084, F16L 37/42, F16L 37/12, F16L 37/44

(54) **HOSE COUPLING PROVIDED WITH NON RETURN VALVE AND A COMBINED LOCKING AND OBSTRUCTING BODY.**
MIT RÜCKSCHLAGVENTIL VERSEHENE SCHLAUCHKUPPLUNG UND KOMBINIERTER VERRIEGELUNGS- UND SPERRKÖRPER
RACCORD DE TUYAU EQUIPE D'UN CLAPET DE NON RETOUR ET VERROUILLAGE DU CORPS OBTURATEUR COMBINES

(30) Priority: 23.05.2005 SE 0501143
(43) Date of publication of application: 20.02.2008
(73) Proprietor: CEJN AB, 541 25 Skövde (SE)
(72) Inventor: Engdahl, Björn, 8400 Lagoa (PT)
(74) Representative: Murgitroyd & Company
(86) International application number: PCT/SE2006/000590
(87) International publication number: WO 2006/126936

(56) References cited:
- EP-B1- 1 033 522
- WO-A1-97/47911
- WO-A1-97/47911
- SE-C2- 506 302
- US-A- 5 547 166
- US-A- 5 547 166

## Description

### Background

Quick couplings with pressure relief function was presented in a first patent SE 470 452 B and in a later patent SE 506 302 C2 . Both of these patents describe a quick coupling for compressed air with no recoil and disturbing noise when disconnecting, it's all eliminated. This is an unpleasant characteristic for ordinary couplings with out pressure relief function.

These couplings contains locking bodies and locking pawls. The function of these couplings is to stop the male part, the nipple, in intermediate positions until the pressure reliefs in the nipple have entirely or partly dropped down. The nipple sets free automatically or with a light press on the nipple. In these patents the coupling is provided with at least four locking bodies which interacting in pairs. The two pairs of locking bodies have two different functions in the coupling with pressure relief function. One of the pair of the locking bodies will lock the nipple when the coupling is connected. The other pair of locking bodies will lock the nipple in a pressure relief position. US5547166 and WO97/47911 may also be regarded as useful background art.

### Summary

It is an object of the present invention to provide a hose coupling. This object can be achieved by the features as defined by the independent claim 1. Further enhancements are characterised in the dependent claims.

This disclosure describes a combined locking pawl of the two different locking bodies as describes above. That means you only have to have one pair of locking pawls instead of having two pairs of locking bodies to achieve the same function.
1. Since you only need to do two grooves in the female part instead of four, the strength increases radically.
2. To combine the two pairs of locking bodies to one pair of locking pawls it's possible to increase the strength of these locking pawls, you can make them bigger.
3. An easier and faster manufacturing because of fewer components and less processing of the details.
4. To have only one pair of locking pawls instead of two, there will be fewer components in the coupling and the reliability of the coupling will increase to.

### Drawings

Exemplary embodiment of the invention will be described in more detail in the following text referring to the attached drawings.
Fig 1. Shows the female part.
Fig. 2 Shows the spring-loaded sleeve.
Fig. 3 Shows the nipple.
Fig. 4 Shows the none-return valve
Fig. 5 Shows a combined locking pawl of two different locking bodies.
Fig. 6 Shows a female part with an axial groove for a locking pawl.
Fig. 7 Shows the interacting components with the locking pawls.
Fig. 8 Shows a cross section of the coupling and the nipple.
Fig. 9a Shows the female part.
Fig. 9b Shows the locking pawl when the coupling is disconnected according to section A-A of fig. 9a.
Fig. 10 Shows the locking pawl when the nipple is entering the female part.
Fig. 11 Shows the locking pawl when the nipple almost have reached its locking position.
Fig. 12 Shows the locking pawl when the nipple is in the locking position.
Fig. 13 Shows the locking pawl during the disconnection of the nipple from the locking position.
Fig. 14 Shows the locking pawl in a pressure relief position.
Fig. 15 Shows the locking pawl in a disconnecting position.
Fig. 16 Shows the locking pawl in disconnected position.

### Description of exemplary embodiments

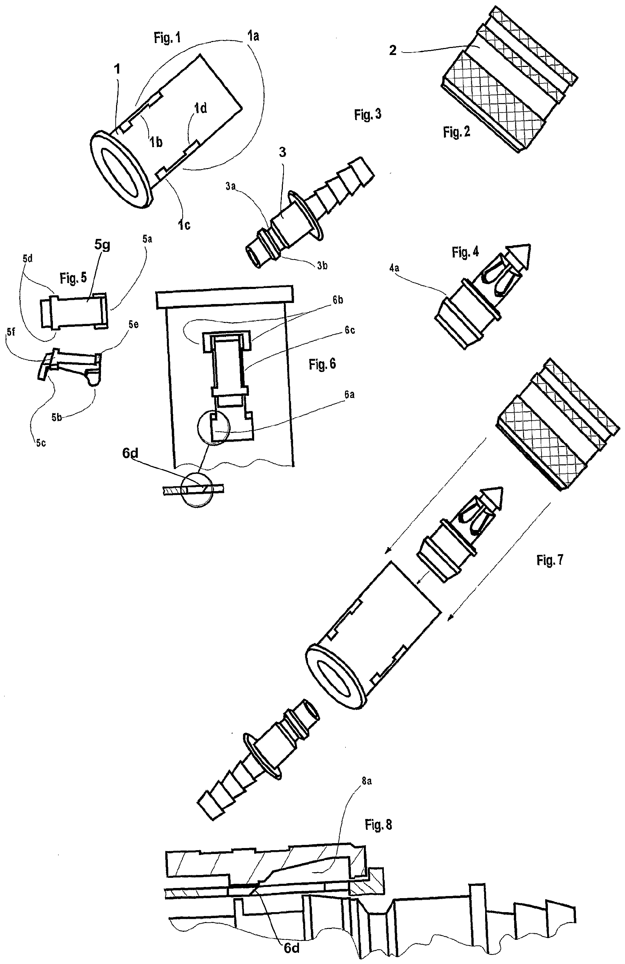

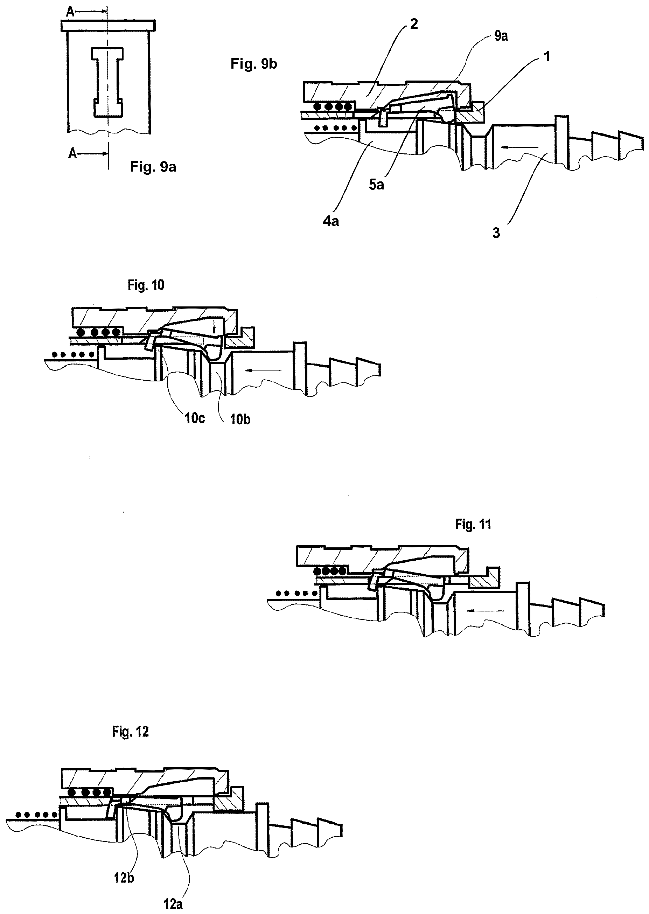

Fig. 10 illustrates inserting the nipple (3) into the female part (1) at which the fore part (5b) of the locking pawl (5a in fig. 5) goes down into the T-shaped groove (6b in fig.6) adjusted for the locking pawl (5a) in the female part (1). Since the circumferential groove (3a) in the nipple (3 in fig.3) offers space for the locking pawl (5a) to glide down. The female part (fig.1) is provided with at least through the sleeves partition an axially orientated elongated groove (1a in fig.1) which collaborate with a locking pawl combining of obstructing and locking function, the groove (1a) thus being an opening through the sleeves partition.

When the nipple (3) is pushed further into the female part (1), the locking pawl (5a) comes into an interacting position with the nipple (3) because of the narrowing axial groove (6c in fig. 6) in the female part (1) forcing down the fore part wings (5e) of the locking pawl (5a) into a circumferential groove (10b in fig 10) in the nipple (3). The locking pawl (5a) will also bring the spring-loaded sleeve (2) backwards (fig. 11) as the nipple (3) is pushed further into the female part (1).

When the locking pawls back wings (5d in fig. 5) have reached the adjusted T-shaped groove (6a in fig. 6) in the female part (1) and has fallen down into the groove (12b in fig12), and the spring- loaded sleeve (2) have been forced back over the locking pawl (5a) to its origin position (fig. 12), then the nipple (3) is in a locked and connected position (see fig.12).

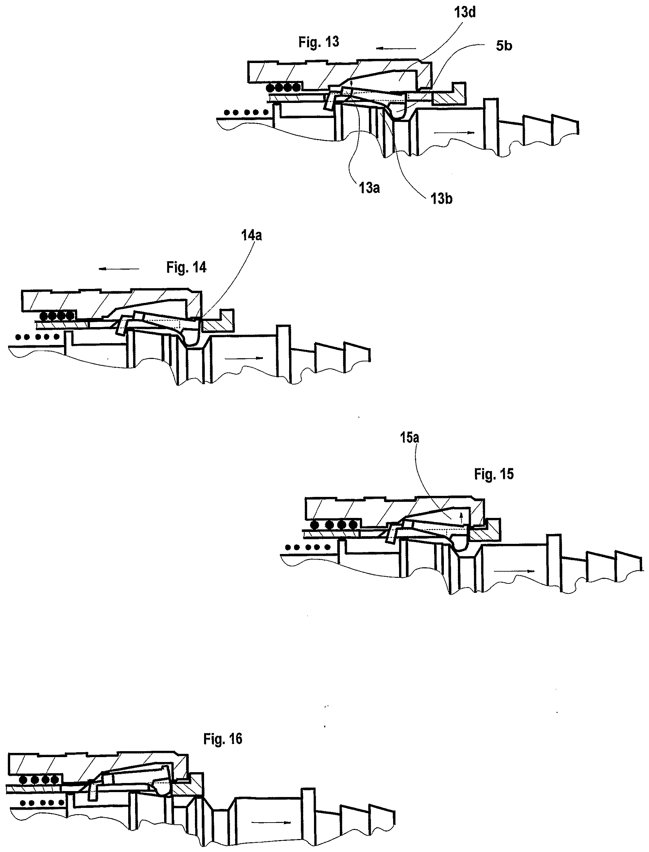

To start the pressure relief function, the spring-loaded sleeve (2) is pushed backwards (fig.13), the internal circumferential groove (8a in fig. 8, 9a in fig. 9b, 13d in fig. 13) in the sleeve (2) allows the locking pawl (5a) to go out of the locking position (13a in fig.13) and glide to a pressure relief position (see fig.14). When the spring-loaded sleeve (2) is pushed back, the locking pawl (5a) is out in a pressure relief position (fig.14). The sleeves fore internal ring (14a in fig.14) makes sure to lock the locking pawl (5a) into the circumferential groove (3a, 12a in fig. 12) in the nipple (3) in the pressure relief position.

To disconnect the nipple (3) from the female part (1), just bring a light push to the nipple (3) and the spring-loaded sleeve (2) will return back to its forward position (fig15). The locking pawls (5a) are offered space out in the internal circumferential groove (15a in fig.15) in the spring loaded sleeve (2) and thereby the nipple (3) will be relieved from the female part (fig. 16).

By shaping the female part (1) as described above it is possible with just one kind of locking pawl (5a) to achieve the two different locking positions of the nipple (3), in a locked and connected position, and in a pressure relief position.

These two kind of locking positions were not able to be achieved without two kinds of locking bodies before. Therefor you will increase the strength of the female part (1) because there will only be two grooves instead of four, and the locking pawl (5a) could therefor be produced in a larger size and thereby with a higher strength. There will be a reduction of components and also easier and faster manufacturing.

## Claims

1. Hose coupling comprising a male part (3) and a female part (1);
the male part (3) being insertable in the female part (1), and the male part (1) comprising a circumferential groove (10b);
the female part comprising a non-return valve (4a), a sleeve (2), and a locking pawl (5a);
the non-return valve (4a) is configured to control the flow through the hose coupling, and the non-return valve (4a, 10c) is surrounded with the sleeve (2); and
the sleeve (2) being a spring loaded axially displaceable sleeve (2), in a first displacement, interacting with the locking pawl (5a) to engage the locking pawl (5a) with the circumferential groove (10b) in the male part (3) and to lock the male part (3) to the female part (1), and in another displacement of the spring loaded axially displaceable sleeve (2) the locking pawl (5a) obstructing the male part (3) in an partial drawn out position; wherein the female part (1) is provided with at least one axially orientated elongated opening (1a), the opening (1a) extending through a sleeve partition of the female part (1), and the opening (1a) collaborating with the locking pawl (5a) providing a combined obstructing and locking function (12a, 12b) through an axially displacement of an internally leaning circumferential groove (6d) of the spring loaded sleeve (2) whereby the locking pawl (5a) is moved out of or in engagement with different peripheral projections (3b, 13b) on the outside circumferential surface of the male part (3).

2. Hose coupling according to claim 1, wherein the female part (1) is provided with two diametrical opposite elongated openings (1a) which each is provided with the combined obstructing and locking pawl (5a).

3. Hose coupling according to claim 1 or 2, wherein the the at least one elongated opening(s) (1a) is mainly rectangular and end parts (6a, 6b) of the at least one elongated opening (1a) are wider than a middle section (6c) of the elongate opening (1a); and
wherein the, or each, locking pawl (5a) has a middle section (5g) with a size that is just below the size of the middle section (6c) of the elongate opening (1a), and the, or each, locking pawl (5a) has end parts, or wings, (5b, 5d, 5f) with a size that exceed the size of the middle section (6c) of the elongate opening (1a) but a little bit less wide than the end parts (1c, 1d, 6a, 6b) of the elongate opening (1a).

## Patentansprüche

1. Eine Schlauchkupplung, die ein Vaterteil (3) und ein Mutterteil (1) beinhaltet;
wobei der Vaterteil (3) in den Mutterteil (1) einsetzbar ist und der Vaterteil (1) eine Umfangskerbe (10b) beinhaltet;
wobei der Mutterteil ein Rückschlagventil (4a), eine Hülse (2) und eine Verriegelungsklaue (5a) beinhaltet;
wobei das Rückschlagventil (4a) konfiguriert ist, den Fluss durch die Schlauchkupplung zu steuern, und das Rückschlagventil (4a, 10c) von der Hülse (2) umgeben ist; und wobei die Hülse (2) eine federbelastete axial verschiebbare Hülse (2) ist, die in einer ersten Verschiebung mit der Verriegelungsklaue (5a) interagiert, um die Verriegelungsklaue (5a) mit der Umfangskerbe (10b) in dem Vaterteil (3) in Eingriff zu bringen und den Vaterteil (3) mit dem Mutterteil (1) zu verriegeln, und wobei in einer weiteren Verschiebung der federbelasteten axial verschiebbaren Hülse (2) die Verriegelungsklaue (5a) den Vaterteil (3) in einer teilweise ausgezogenen Position sperrt;
wobei der Mutterteil (1) mit mindestens einer axial orientierten länglichen Öffnung (1a) bereitgestellt ist, wobei sich die Öffnung (1a) durch einen Hülsenteilbereich des Mutterteils (1) erstreckt und die Öffnung (1a) mit der Verriegelungsklaue (5a) kollaboriert, was eine kombinierte Sperr- und Verriegelungsfunktion (12a, 12b) durch eine axiale Verschiebung einer nach innen geneigten Umfangskerbe (6d) der federbelasteten Hülse (2) bereitstellt, wodurch die Verriegelungsklaue (5a) außer oder in Eingriff mit verschiedenen peripheren Vorsprüngen (3b, 13b) an der äußeren Umfangsoberfläche des Vaterteils (3) gebracht wird.

2. Schlauchkupplung gemäß Anspruch 1, wobei der Mutterteil (1) mit zwei diametral entgegengesetzten länglichen Öffnungen (1a) bereitgestellt ist, die jeweils mit der kombinierten Sperr- und Verriegelungsklaue (5a) bereitgestellt sind.

3. Schlauchkupplung gemäß Anspruch 1 oder 2, wobei die mindestens eine längliche Öffnung (1a) hauptsächlich rechteckig ist und Endteile (6a, 6b) der mindestens einen länglichen Öffnung (1a) breiter als ein mittlerer Abschnitt (6c) der länglichen Öffnung (1a) sind; und
wobei die, oder jede, Verriegelungsklaue (5a) einen mittleren Abschnitt (5g) mit einer Größe aufweist, die geringfügig kleiner als die Größe des mittleren Abschnitts (6c) der länglichen Öffnung (1a) ist, und die, oder jede, Verriegelungsklaue (5a) Endteile, oder Flügel, (5b, 5d, 5f) mit einer Größe aufweist, die die Größe des mittleren Abschnitts (6c) der länglichen Öffnung (1a) übertreffen, aber etwas weniger breit als die Endteile (1c, 1d, 6a, 6b) der länglichen Öffnung (1 a) sind.

## Revendications

1. Raccord pour tuyaux comprenant une partie mâle (3) et une partie femelle (1) ;
la partie mâle (3) étant insérable dans la partie femelle (1), et la partie mâle (1) comprenant une rainure circonférentielle (10b) ;
la partie femelle comprenant un clapet de non-retour (4a), un manchon (2), et un cliquet de verrouillage (5a) ;
le clapet de non-retour (4a) est configuré afin de contrôler l'écoulement à travers le raccord pour tuyaux, et le clapet de non-retour (4a, 10c) est entouré par le manchon (2) ; et
le manchon (2) étant un manchon déplaçable de manière axiale chargé par ressort (2) interagissant, dans un premier déplacement, avec le cliquet de verrouillage (5a) afin de mettre le cliquet de verrouillage (5a) en engagement avec la rainure circonférentielle (10b) dans la partie mâle (3) et verrouiller la partie mâle (3) sur la partie femelle (1), et dans un autre déplacement du manchon déplaçable de manière axiale chargé par ressort (2) le cliquet de verrouillage (5a) bloquant la partie mâle (3) dans une position de retrait partielle ;
dans lequel la partie femelle (1) est pourvue d'au moins un orifice allongé orienté de manière axiale (1a), l'orifice (1a) s'étendant à travers un segment de manchon de la partie femelle (1), et l'orifice (1a) collaborant avec le cliquet de verrouillage (5a) fournissant une fonction de verrouillage et de blocage combinée (12a, 12b) par l'intermédiaire d'un déplacement de manière axiale d'une rainure circonférentielle penchant vers l'intérieur (6d) du manchon chargé par ressort (2) grâce à quoi le cliquet de verrouillage (5a) est amené à bouger pour se dégager de différentes saillies périphériques (3b, 13b) sur la surface circonférentielle extérieure de la partie mâle (3) ou se mettre en engagement avec celles-ci.

2. Raccord pour tuyaux selon la revendication 1, dans lequel la partie femelle (1) est pourvue de deux orifices allongés diamétralement opposés (1a) qui sont chacun pourvus du cliquet de verrouillage et de blocage combiné (5a).

3. Raccord pour tuyaux selon la revendication 1 ou la revendication 2, dans lequel le ou les au moins un orifices allongés (1a) sont principalement rectangulaires et des parties d'extrémité (6a, 6b) de l'au moins un orifice allongé (1a) sont plus larges qu'une section de milieu (6c) de l'orifice allongé (1a) ; et
dans lequel le, ou chaque, cliquet de verrouillage (5a) a une section de milieu (5g) d'une taille qui est juste en dessous de la taille de la section de milieu (6c) de l'orifice allongé (1a), et le, ou chaque, cliquet de verrouillage (5a) a des parties d'extrémité, ou ailes, (5b, 5d, 5f) d'une taille qui dépasse la taille de la section de milieu (6c) de l'orifice allongé (1a) mais un petit peu moins large que les parties d'extrémité (1c, 1d, 6a, 6b) de l'orifice allongé (1a).
